# EUROPEAN PATENT APPLICATION

(11) **EP 4 693 916 A1**
(43) Date of publication of application: **11.02.2026**
(21) Application number: 25190073.4
(22) Date of filing: 17.07.2025
(51) Int. Cl.: H04B 5/20, H04B 5/77

(54) **NEAR FIELD COMMUNICATION CONTROL METHOD AND APPARATUS, AND NEAR FIELD COMMUNICATION DEVICE**

(30) Priority: 09.08.2024 CN 202411090606
(71) Applicant: Advanced Nova Technologies (Singapore) Holding Pte. Ltd., Singapore 189773 (SG)
(72) Inventor: ZHAO, Huayang, Hangzhou,, 310000 (CN)
(74) Representative: Winter, Brandl - Partnerschaft mbB

(57) **Abstract**

Embodiments of this specification disclose a near field communication control method and apparatus, and a near field communication device, to help improve a success rate and efficiency of near field communication between a near field communication device of a merchant and a mobile phone of a user. The solution includes: collecting a near field communication signal of a currently approaching sensing object by using one or more near field communication antennas deployed on a near field communication device; determining a working mode of the sensing object based on the near field communication signal; if it is determined that the sensing object is in an unfriendly working mode, sending an excitation signal to the sensing object; and establishing a communication connection to the sensing object by using at least one near field communication antenna, and executing a target service through the communication connection.

## Description

### TECHNICAL FIELD

This specification relates to the field of near field communication technologies, and in particular, to a near field communication control method and apparatus, and a near field communication device.

### BACKGROUND

Near field communication (NFC) is a short-distance high-frequency radio technology that runs within a distance of 20 centimeters at a frequency of 13.56 MHz, and is evolved from integration of contactless radio frequency identification (RFID) and the interconnection and interoperability technology, providing a very secure and fast communication manner for various electronic products.

With widespread use of smartphones that support a near field communication function, the near field communication technology is also increasingly applied in fields such as payment. A merchant can use a near field communication device as a cash collection device, and a user can put a mobile phone approaching the near field communication device of the merchant to perform sensing communication, to complete payment.

In the existing technology, to expand a sensing range, a large antenna needs to be used for a near field communication device. However, after an antenna area increases, signal strength per unit area decreases, leading to a reduction in a reading distance. In addition, areas of near field communication antennas of different mobile phones, locations of the near field communication antennas on the mobile phones, antenna statuses, and power consumption control logic are different, which also affects an actual sensing effect of the near field communication device, and further affects a success rate and efficiency of near field communication.

Based on this, there is a need for a solution that helps improve a success rate and efficiency of near field communication between a near field communication device of a merchant and a mobile phone.

### SUMMARY

One or more embodiments of this specification provide a near field communication control method and apparatus, a near field communication device, and a storage medium, to resolve the following technical problem: There is a need for a solution that helps improve a success rate and efficiency of near field communication between a near field communication device of a merchant and a mobile phone.

To resolve the above-mentioned technical problem, one or more embodiments of this specification are implemented as follows:
one or more embodiments of this specification provide a near field communication control method, including:
collecting a near field communication signal of a currently approaching sensing object by using one or more near field communication antennas deployed on a near field communication device;
determining a working mode of the sensing object based on the near field communication signal;
if it is determined that the sensing object is in an unfriendly working mode, sending an excitation signal to the sensing object by using at least one near field communication antenna, so that the sensing object exits the unfriendly working mode in response to the excitation signal; and
establishing a communication connection to the sensing object by using at least one near field communication antenna, and executing a target service through the communication connection.

One or more embodiments of this specification provide a near field communication control apparatus, including:
a near field communication signal collection module, configured to collect a near field communication signal of a currently approaching sensing object by using one or more near field communication antennas deployed on a near field communication device;
an object working mode determining module, configured to determine a working mode of the sensing object based on the near field communication signal;
an unfriendly working mode processing module, configured to: if it is determined that the sensing object is in an unfriendly working mode, send an excitation signal to the sensing object by using at least one near field communication antenna, so that the sensing object exits the unfriendly working mode in response to the excitation signal; and
a near field communication service execution module, configured to establish a communication connection to the sensing object by using at least one near field communication antenna, and execute a target service through the communication connection.

One or more embodiments of this specification provide a near field communication device, including one or more near field communication antennas and one or more control chips;
at least one near field communication antenna collects a near field communication signal of a currently approaching sensing object;
the control chip determines a working mode of the sensing object based on the near field communication signal, and if it is determined that the sensing object is in an unfriendly working mode, sends an excitation signal to the sensing object by using at least one near field communication antenna, so that the sensing object exits the unfriendly working mode in response to the excitation signal; and
at least one near field communication antenna establishes a communication connection to the sensing object, and executes a target service through the communication connection.

One or more embodiments of this specification provide a near field communication device, including:
at least one processor; and
a memory communicatively connected to the at least one processor, where
the memory stores instructions executable by the at least one processor, and the instructions are executed by the at least one processor, to enable the at least one processor to perform the following operations:
   collecting a near field communication signal of a currently approaching sensing object by using one or more near field communication antennas deployed on a near field communication device;
   determining a working mode of the sensing object based on the near field communication signal;
   if it is determined that the sensing object is in an unfriendly working mode, sending an excitation signal to the sensing object by using at least one near field communication antenna, so that the sensing object exits the unfriendly working mode in response to the excitation signal; and
   establishing a communication connection to the sensing object by using at least one near field communication antenna, and executing a target service through the communication connection.

One or more embodiments of this specification provide a nonvolatile computer storage medium that stores computer executable instructions, and the computer executable instructions are set to:
collecting a near field communication signal of a currently approaching sensing object by using one or more near field communication antennas deployed on a near field communication device;
determine a working mode of the sensing object based on the near field communication signal;
if it is determined that the sensing object is in an unfriendly working mode, send an excitation signal to the sensing object by using at least one near field communication antenna, so that the sensing object exits the unfriendly working mode in response to the excitation signal; and
establish a communication connection to the sensing object by using at least one near field communication antenna, and executing a target service through the communication connection.

At least one of the technical solutions used in one or more embodiments of this specification can achieve the following beneficial effects: It can be sensed, by using a near field communication antenna on a near field communication device, whether a currently approaching sensing object (for example, a mobile phone) is in an unfriendly working mode, for example, an unmatched emulated card or card reader is used, power is relatively low, and another channel is abnormal. If yes, the sensing object is actively intervened with, and an excitation signal is sent to the sensing object, so that the sensing object exits the unfriendly working mode. Next, a communication connection is established to the near field communication antenna on the near field communication device to execute a target service. In this way, it helps improve a success rate and efficiency of near field communication between a near field communication device of a merchant and a mobile phone of a user, and further helps smooth execution of the target service.

### BRIEF DESCRIPTION OF DRAWINGS

To describe the technical solutions in some embodiments of this specification or in a conventional technology more clearly, the following briefly describes the accompanying drawings needed for describing some embodiments or the conventional technology. Clearly, the accompanying drawings in the following descriptions merely show some embodiments of this specification, and a person of ordinary skill in the art can still derive other drawings from these accompanying drawings without creative efforts.
FIG. 1 is a schematic flowchart illustrating a near field communication control method, according to one or more embodiments of the present specification;
FIG. 2(a) and FIG. 2(b) are a schematic flowchart illustrating a solution for determining an operation mode of a sensing object and a schematic diagram illustrating comparison between signal waveforms of a near field communication signal, according to one or more embodiments of this specification;
FIG. 3 is a schematic flowchart illustrating another solution for determining and processing a working mode of a sensing object, according to one or more embodiments of this specification;
FIG. 4 is a schematic flowchart illustrating an unfriendly working mode determining solution, according to one or more embodiments of this specification;
FIG. 5 is a schematic flowchart illustrating a specific analysis solution for a sensing object, according to one or more embodiments of this specification;
FIG. 6 is a schematic flowchart illustrating a solution for coping with a code scanning abnormality based on a near field communication signal, according to one or more embodiments of this specification;
FIG. 7 is a schematic diagram illustrating a structure of a near field communication device, according to one or more embodiments of this specification;
FIG. 8(a) to FIG. 8(d) are a schematic diagram illustrating a specific structure of a first near field communication device in an application scenario and a schematic diagram illustrating a mobile phone approaching the near field communication device, according to one or more embodiments of this specification;
FIG. 9 is a schematic diagram illustrating a specific structure of a second near field communication device in an application scenario, according to one or more embodiments of this specification;
FIG. 10 is a schematic diagram illustrating a specific structure of a third near field communication device in an application scenario, according to one or more embodiments of this specification;
FIG. 11 is a schematic diagram illustrating a structure of a near field communication control apparatus, according to one or more embodiments of this specification; and
FIG. 12 is a schematic diagram illustrating a structure of a near field communication device, according to one or more embodiments of this specification.

### DESCRIPTION OF EMBODIMENTS

Embodiments of this specification provide a near field communication control method and apparatus, a near field communication device, and a storage medium.

To make a person skilled in the art better understand the technical solutions in this specification, the following clearly and comprehensively describes the technical solutions in the embodiments of this specification with reference to the accompanying drawings in the embodiments of this specification. Clearly, the described embodiments are merely some but not all of the embodiments of this specification. All other embodiments obtained by a person of ordinary skill in the art based on the embodiments of this specification without creative efforts shall fall within the protection scope of this specification.

For the problem mentioned in the background, the applicant notes that in actual applications, when a mobile phone approaches a near field communication device, the mobile phone may be in one or more unfriendly working modes, and the unfriendly working mode may adversely affect subsequent interaction between the mobile phone and the near field communication device. Therefore, this specification provides a solution for proactive intervention in advance to prevent continued interaction in the unfriendly working mode.

The following continues to describe the solutions of this specification based on such an overall idea.

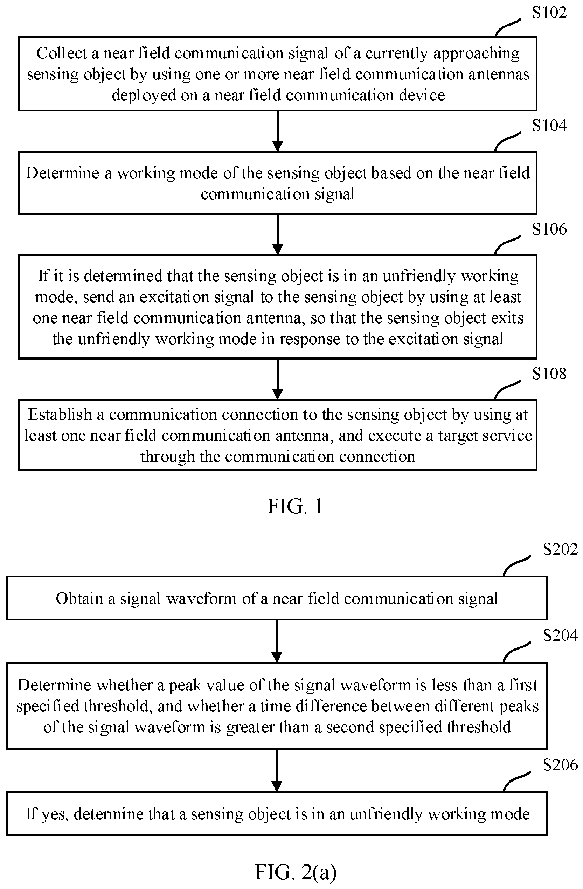

FIG. 1 is a schematic flowchart illustrating a near field communication control method, according to one or more embodiments of the present specification. An execution entity of the procedure can be a near field communication device or a module in the near field communication device. From a software perspective, the execution entity can be an application client on the near field communication device, such as a cash collection application client or a check-in client.

The procedure in FIG. 1 includes the following steps:
S102: Collect a near field communication signal of a currently approaching sensing object by using one or more near field communication antennas deployed on the near field communication device.

If a plurality of near field communication antennas are deployed on the near field communication device, some of the plurality of near field communication antennas (for example, near field communication antennas capable of first sensing the sensing object) can collect the near field communication signal of the currently approaching sensing object. If only one near field communication antenna is deployed on the near field communication device, subsequent related actions are implemented based on the near field communication antenna.

For ease of description, the following some embodiments are mainly described by using a case that a plurality of near field communication antennas are deployed on the near field communication device. This is also a preferred deployment solution used in this specification.

In one or more embodiments of this specification, the near field communication antenna in step S102 can collect a signal through sensing, to help deduce a direction from which a sensing object is close to the near field communication device. Therefore, a plurality of such near field communication antennas can be deployed for signal collection to perform deduction more accurately. Sensing capabilities of these antennas can be actively controlled to affect a quantity of near field communication antennas that can simultaneously sense the currently approaching sensing object.

The near field communication antennas are deployed at different locations of the near field communication device, and particularly, can be deployed in a distributed manner. This helps achieve better sensing capabilities for sensing objects in various directions. Therefore, a global sensing range is relatively large to help more reliably collect a signal, and reliability is higher. In addition, an operation requirement for a user is also reduced, and the user can more freely and randomly put a mobile phone approaching the near field communication device from more directions to perform near field communication interaction.

The sensing object can be a mobile terminal device used by a user, for example, a mobile phone, a smartwatch, a portable game machine, etc. that supports a near field communication function.

S104: Determine a working mode of the sensing object based on the near field communication signal.

In one or more embodiments of this specification, numerical analysis, waveform analysis, or analysis of additionally carried information can be performed on the near field communication signal, and it is determined, based on an analysis result, whether the sensing object is currently in an unfriendly working mode.

The "unfriendly" herein means that it is unfriendly to establish a communication connection to the near field communication device, or it is unfriendly to further execute a service. As a result, a next interaction process with the near field communication device may be affected. The mode herein can be self-defined by a service provider of the near field communication device based on a requirement, and does not need to be an optional working mode of the sensing object. In this way, flexibility is good, and it can help the sensing object to cope with a problem that cannot be resolved temporarily by the sensing object.

S106: If it is determined that the sensing object is in an unfriendly working mode, send an excitation signal to the sensing object by using at least one near field communication antenna, so that the sensing object exits the unfriendly working mode in response to the excitation signal.

In one or more embodiments of this specification, the excitation signal is sent to indirectly stimulate (for example, activate arousal or electromagnetic interference at a physical layer) the sensing object to switch a working mode, or more specifically, information carried in the excitation signal is used to directly indicate the sensing object to switch a working mode. The latter manner is particularly applicable to an unfriendly working mode self-defined on a side of the near field communication device.

In one or more embodiments of this specification, auxiliary software provided by a service provider of the near field communication device can be pre-deployed on the sensing object. The auxiliary software is used to specially preprocess the near field communication signal of the sensing object, or specially preprocess or respond to the received excitation signal, to assist working mode determining performed by the near field communication device and/or excitation performed on the unfriendly working mode, thereby breaking through a limitation of a capability of the sensing object.

S108: Establish a communication connection to the sensing object by using at least one near field communication antenna, and execute a target service through the communication connection.

The near field communication antenna used to establish the communication connection and the near field communication antenna used to send the excitation signal may not be a same near field communication antenna. At least one near field communication antenna can be selected, based on a specified policy, from the near field communication antennas deployed on the near field communication device, to establish the communication connection to the sensing object.

Specifically, for example, at least one near field communication antenna that has an advantage (for example, a relatively short distance, relatively high signal strength, a relatively matched signal direction, or relatively idle) is selected as a target near field communication antenna based on the near field communication signals respectively collected by the plurality of near field communication antennas and a specified advantage dimension. Optionally, a signal on the target near field communication antenna can be temporarily enhanced, and/or a signal on one or more remaining near field communication antennas can be temporarily weakened, so that a near field communication range can be specifically expanded while costs are considered. Then, the communication connection is established to the sensing object by using the target near field communication antenna.

In the plurality of near field communication antennas that can sense the currently approaching sensing object, a near field communication antenna closer to the sensing object and/or a near field communication antenna whose antenna direction is more aligned to an approaching direction of the sensing object are/is more likely to sense stronger signal strength. The plurality of signal sensing antennas can be properly deployed at different locations on the near field communication device, so that in at least most cases, strength of signals respectively sensed by the signal sensing antennas is different. Based on such a difference, through a mathematical operation such as three-point positioning, at least an approaching direction of the sensing objects can be roughly estimated, and even a relative position of the sensing object to the near field communication device can be more accurately estimated, to select the target near field communication antenna.

A device that supports near field communication (including the above-mentioned near field communication device and sensing object) can use a card emulation mode, can use a card reader mode, or can use a point-to-point communication mode. The first two modes are mainly considered herein. In the card emulation mode, the device is emulated as an IC card using the RFID technology for reading by a card reader. In the card reader mode, the device is used as a card reader, for example, the device can read related information from an IC card, a poster, or an electronic tag of exhibited information that uses the RFID technology.

In a conventional technology, using a payment field as an example, a near field communication device used by a merchant for payment uses the card reader mode, and as a card reader, a mobile phone of a user uses the card emulation mode to emulate a credit card or a debit card. In this case, the user puts the mobile phone approaching the payment device to perform sensing interaction, that is, an effect similar to scanning a card for payment can be achieved. However, in actual applications, a compatibility problem may exist in the above-mentioned interaction manner, for example, including a compatibility problem that may exist between a manufacturer of the mobile phone and some applications, which brings an unreliable factor to the above-mentioned interaction, and may even affect normal development of some services.

Based on this, breaking through a limitation of traditional thinking is taken into consideration, so that the near field communication device of the merchant is not limited to using the card reader mode, but is also compatible with the card emulation mode in a service, and can preferentially use the card emulation mode to interact with the mobile phone of the user. In this case, for step S108, after communication is established with the sensing object (such as a mobile phone) by using the target near field communication antenna, it is assumed that payment service interaction is performed. In this case, specifically, for example, the near field communication device of the merchant serves as an emulated card, generates to-be-paid information, so that the mobile phone of the user serving as the sensing object reads the emulated card to obtain the to-be-paid information, and performs payment based on the to-be-paid information (for example, the user confirms payment for an order on the mobile phone).

According to the method in FIG. 1, whether a currently approaching sensing object (for example, a mobile phone) is in an unfriendly working mode can be sensed by using a near field communication antenna on a near field communication device. If yes, the sensing object is actively intervened with, and an excitation signal is sent to the sensing object, so that the sensing object exits the unfriendly working mode. Next, a communication connection is established to the near field communication antenna on the near field communication device to execute a target service. In this way, it helps improve a success rate and efficiency of near field communication between a near field communication device of a merchant and a mobile phone of a user, and further helps smooth execution of the target service.

Based on the method in FIG. 1, this specification further provides some specific implementation solutions and extension solutions of the method, which continue to be described below.

A signal waveform of the near field communication signal collected for the sensing object can be specifically analyzed to determine whether the sensing object is in the unfriendly working mode. In this way, reliability is relatively good, and it helps pre-design a correspondence between different signal waveforms and different working modes (particularly, self-defined working modes) in a more flexible and diversified manner. Based on this, one or more embodiments of this specification provide a schematic flowchart illustrating a solution for determining a working mode of a sensing object, referring to FIG. 2(a).

The procedure in FIG. 2(a) includes the following steps:
S202: Obtain a signal waveform of the near field communication signal.

When a plurality of near field communication antennas respectively collect the near field communication signals, the near field communication signals can be comprehensively analyzed, or some representative near field communication signals (for example, representative near field communication signals with relatively high signal strength or first collected) can be selected for analysis. Analysis is performed based on factors such as a shape of the signal waveform and specific parameters. Two types of parameters are used as examples for analysis in the following steps.

S204: Determine whether a peak value of the signal waveform is less than a first specified threshold, and whether a time difference between different peaks of the signal waveform is greater than a second specified threshold.

In one or more embodiments of this specification, if power consumption of a signal is not enough or even too low, it can be considered that the sensing object is in the unfriendly working mode. In this case, it can be considered that the sensing object is in a low power consumption mode. The peak value and the time difference between different peaks (for example, a time interval between adjacent peaks) used above may affect power consumption. For example, the peak value is usually positively correlated with power consumption, and therefore, a relatively high peak value can be expected to achieve higher power consumption. The time interval is usually negatively correlated with power consumption, and therefore, relatively short time can be expected to achieve higher power consumption. Based on this, thresholds can be respectively set for the two types of parameters, to perform determining in step S204.

It should be noted that, certainly, determining can be simply performed. For example, determining is performed based on a dimension of the waveform, or even the signal waveform is not take into consideration, but it is only considered whether a signal strength value (generally, a power value) in a numerical form is sufficiently high. If no, it is considered that the sensing object is in the unfriendly working mode. An unfriendly working mode determining solution that is more applicable to a current scenario can be selected based on different requirements on aspects such as costs and reliability in actual applications.

S206: If yes, determine that the sensing object is in the unfriendly working mode.

Otherwise, it can be determined that the sensing object is not in the unfriendly working mode, or further analysis can be performed thought another means to determine a conclusion.

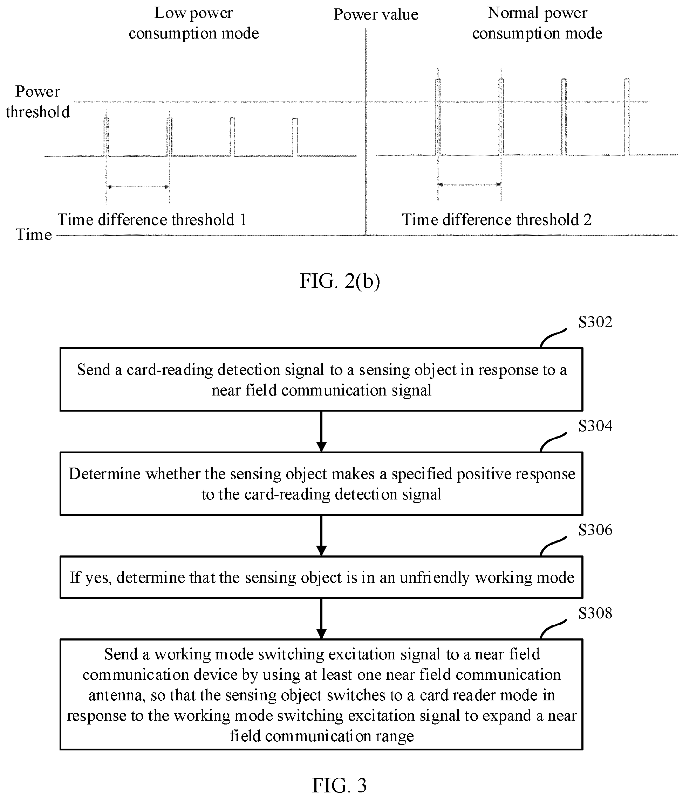

Intuitively, one or more embodiments of this specification further provide a schematic diagram illustrating comparison between signal waveforms of a near field communication signal, referring to FIG. 2(b).

In FIG. 2 (b), a horizontal coordinate axis represents time, and a vertical coordinate axis represents a power value. If it is detected that a power consumption value is less than a specified threshold, and it is found by performing calculation and analysis on the collected signal that, a time difference between two or more power consumption peaks satisfies a time threshold, it can be determined that the sensing object is in the unfriendly working mode. In this example, the unfriendly working mode is specifically referred to as a low power consumption mode. If it is detected that a power consumption value is not less than a specified threshold, and it is found by performing calculation and analysis on the collected signal that, a time difference between two or more power consumption peaks satisfies another time threshold by performing calculation and analysis on the collected signal, it can be determined that the sensing object is in a normal power consumption mode (this mode may still be unfriendly, which is further analyzed later). In this example, an example power consumption threshold is set, which can be used as the above-mentioned first specified threshold, an example time difference threshold 1 (for example, a time difference needs to be greater than the time difference threshold 1) is set for the low power consumption mode, and a time difference threshold 2 (for example, a time difference needs to be less than the time difference threshold 2) is set for the normal power consumption mode.

As mentioned above, in this specification, a near field communication device (for example, a cash collection machine) is expected to work in a card emulation mode, and a mobile phone of a user is expected to work in a card reader mode. However, considering that in actual applications, the mobile phone of the user may work in the card emulation mode by default. Therefore, this is unfriendly for this solution, and it is difficult for both parties to use the card emulation mode to normally complete a target service. Therefore, if the sensing object currently uses the card emulation mode(in addition, in this mode, power consumption may be relatively low), it can also be considered that the sensing object is in the unfriendly working mode. Based on such an idea, one or more embodiments of this specification provide a schematic flowchart illustrating another solution for determining and processing a working mode of a sensing object, referring to FIG. 3.

The procedure in FIG. 3 includes the following steps:
S302: Send a card-reading detection signal to the sensing object in response to the near field communication signal.

In one or more embodiments of this specification, the near field communication device disguises itself as a card reader (actually, a card emulation mode is still used), and the card-reading detection signal is sent to test whether the sensing object currently using a card emulation mode. It should be noted that, the card-reading detection signal is not used to truly request to read service data of the target service, but is merely used for detection. In this way, resource consumption is very small, and slight interaction is required. It can be agreed in advance with the sensing object (for example, implemented based on external software deployed by the near field communication device on the sensing object in advance) on how to respond to the card-reading detection signal. Preferably, a brief response can be made, for example, sending an agreed self-defined flag bit, or sending a small amount of even an extremely small amount of data (for example, a byte at the beginning of a field) in the service data. Certainly, the detection can be implemented only by simply analyzing a signal, without requiring substantive data interaction.

S304: Determine whether the sensing object makes a specified positive response to the card-reading detection signal.

The specified positive response can represent a positive catering to the card reading action, and therefore can be highly likely to reflect that the sensing object currently uses the card emulation mode. For example, the specified positive response is the above-mentioned brief response. In addition, if the sensing object has no abnormal performance (for example, no response, rejection, or error reporting), it can also be considered that the specified positive response is made.

S306: If yes, determine that the sensing object is in the unfriendly working mode.

In this case, although the sensing object can cater to the card reader, the sensing object conflicts with the near field communication device to use the card emulation mode. Therefore, the card emulation mode is considered as "unfriendly".

S308: Send a working mode switching excitation signal to the near field communication device by using the at least one near field communication antenna, so that the sensing object switches to a card reader mode in response to the working mode switching excitation signal to expand a near field communication range.

In the card reader mode, signal strength of the near field communication signal is usually higher, which helps expand the near field communication range, and the sensing object can also successfully interact with the near field communication device that uses the card emulation mode.

According to the solution in FIG. 3, through active intervention by the near field communication device, the near field communication signal of the sensing object can exit the card emulation mode, so that both parties can communicate with each other more effectively and reliably. In this way, it is also helpful to prevent the target near field communication antenna from enhancing unnecessary excessive signal strength to cope with an unfriendly working mode.

Regardless of whether the sensing object uses the card emulation mode or the card reader mode, there is another problem in actual applications. A plurality of emulated cards can be set on the sensing object. However, a user needs to set an emulated card to be used in advance as a default emulated card, to interconnect to a service normally. Otherwise, the service fails or the user needs to select a correct interconnect from a corresponding service page. In addition, in the card reader mode, there may also be more problems. For example, the user may be forced to open a specified service page and then read a card. These problems adversely affect use of a near field communication service by the user. This application considers resolving these problems herein.

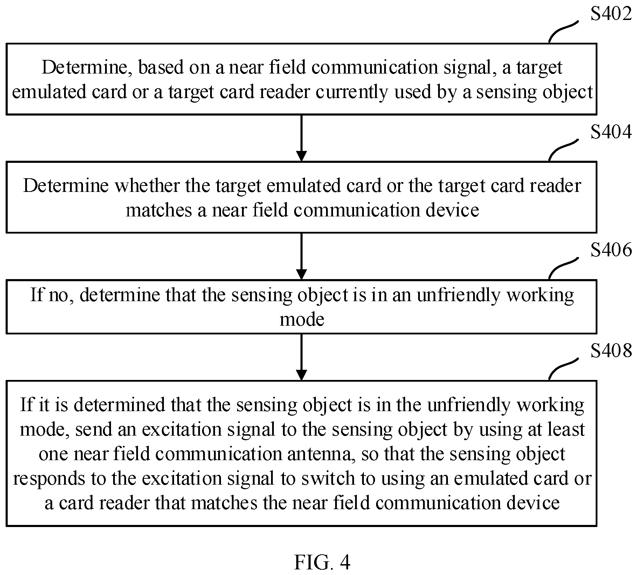

Specifically, one or more embodiments of this specification provide a schematic flowchart illustrating an unfriendly working mode determining solution, referring to FIG. 4.

The procedure in FIG. 4 includes the following steps:
S402: Determine, based on the near field communication signal, a target emulated card or a target card reader currently used by the sensing object.

In one or more embodiments of this specification, signal reprocessing software provided by a service provider of the near field communication device is pre-deployed on the sensing object. The near field communication signal is processed by the signal reprocessing software, and carries information used to indicate the target emulated card or the target card reader. Further, the sensing object has a plurality of optional emulated cards that belong to different services and/or a plurality of optional card readers that belong to different services, and a currently used card/card reader can be a default card/card reader.

S404: Determine whether the target emulated card or the target card reader matches the near field communication device.

In one or more embodiments of this specification, the user does not need to manually select an emulated card or a card reader on the sensing object instantly. Using a mobile phone as an example, the user can directly put the mobile phone (in an instant screen-off state) approaching the near field communication device, and the signal reprocessing software cooperates with the near field communication device to perform adaptive processing.

Matching can be determined based on whether a service currently provided by the near field communication device is consistent with a service corresponding to the target emulated card or the target card reader. If the services are consistent (for example, the services of both parties are a same payment service), it can be determined that the target emulated card or the target card reader matches the near field communication device.

S406: If no, determine that the sensing object is in the unfriendly working mode.

S408: If it is determined that the sensing object is in the unfriendly working mode, send an excitation signal to the sensing object by using at least one near field communication antenna, so that the sensing object responds to the excitation signal to switch to using an emulated card or a card reader that matches the near field communication device.

In one or more embodiments of this specification, a matched emulated card or card reader can be directly indicated in the excitation signal. Then, the sensing object can parse the excitation signal by using a capability of the sensing object or a capability of the signal reprocessing software, to determine the matched emulated card or card reader, and then correspondingly switch to the matched emulated card or card reader. In this way, there is no need for real-time user intervention, and a service failure caused by such a mismatch can be avoided, resulting in better experience.

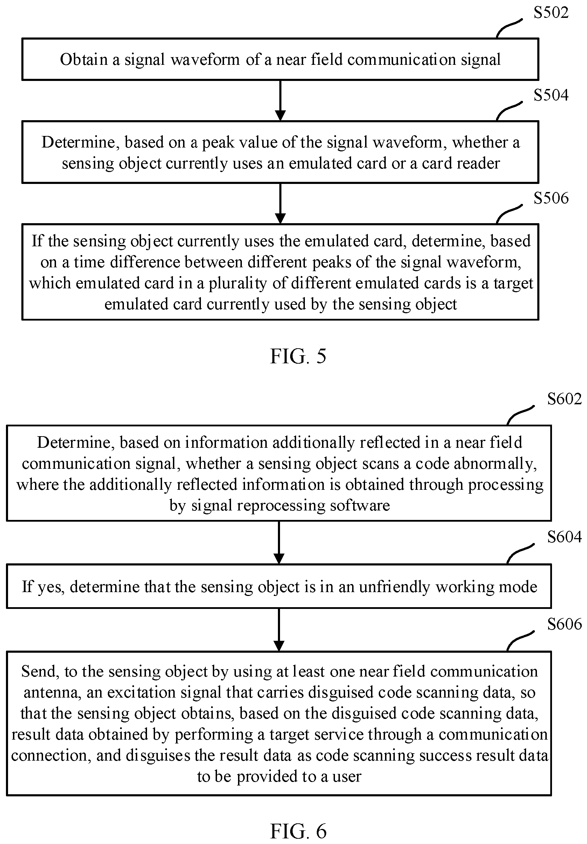

Further, one or more embodiments of this specification further provide a schematic flowchart illustrating a specific analysis solution for a sensing object, referring to FIG. 5.

The procedure in FIG. 5 includes the following steps:
S502: Obtain a signal waveform of the near field communication signal.

In this procedure, for example, related information of an emulated card or a card reader is reflected by a difference represented by the signal waveform based on a specified policy, which helps complete parsing based on an underlying protocol without relying on or modifying a higher layer protocol. Certainly, there is another implementation, for example, the related information is reflected by using a self-defined field.

S504: Determine, based on a peak value of the signal waveform, whether the sensing object currently uses an emulated card or a card reader.

If the peak value is high enough, it can be considered that the sensing object currently uses the card reader. If the peak value is low enough, it can be considered that the sensing object currently uses the emulated card. Whether the peak value is high/low enough herein can be determined through comparison based on a specified threshold.

S506: If the sensing object currently uses the emulated card, determine, based on a time difference between different peaks of the signal waveform, which emulated card in a plurality of different emulated cards is the target emulated card currently used by the sensing object.

In actual applications, it is common for a same user to have a plurality of emulated cards. Therefore, in this step, for example, a plurality of different time differences between different peaks (for example, adjacent peaks) of the signal waveform are used as examples to distinguish between different emulated cards, and which emulated card is the target emulated card is determined based on this.

Certainly, in addition to the above-mentioned example distinguishing manner, a difference in the signal waveform can be created in another aspect to distinguish between different emulated cards and/or different card readers.

Similarly, an activation signal can also indicate, in the above-mentioned manner, an emulated card or a card reader that expects to be used by the sensing object.

Based on the capability of the signal reprocessing software, another service interaction manner can be assisted by actively intervening in the near field communication signal and the excitation signal. Using a code scanning manner as an example, one or more embodiments of this specification provide a schematic flowchart illustrating a solution for coping with a code scanning abnormality based on a near field communication signal, referring to FIG. 6.

The procedure in FIG. 6 includes the following steps:
S602: Determine, based on information additionally reflected in the near field communication signal, whether the sensing object scans a code abnormally, where the additionally reflected information is obtained through processing by the signal reprocessing software.

In one or more embodiments of this specification, code scanning herein can be performed by the sensing object in a service client provided by a service provider (for example, a payment service provider) corresponding to the near field communication device or a partner of (for example, an e-commerce service provider, an online live streaming service provider, a short video service provider, or an instant messaging service provider that provides corresponding authorization) the near field communication device. In this way, the signal reprocessing software has permission to perform corresponding detection and intervention actions, which helps improve multi-party security.

A user of the sensing object can currently prepare to use the sensing object to perform a service through code scanning (a corresponding two-dimensional code can be placed on the near field communication device or another related area nearby), but a code scanning abnormality may occur due to a scanning failure, a parsing failure, a two-dimensional code failure, or another reason, which may affect user experience. To prevent inconvenience caused to the user in this case, the signal reprocessing software can instantly detect whether a code scanning abnormality occurs on the sensing object (which can be pre-determining herein, so that an intervention can be performed in advance, and an effect is better). If yes, corresponding state information, that is, the above-mentioned additionally reflected information, can be added to the near field communication signal, so that the near field communication device can sense the code scanning abnormality. Further, in this case, the code scanning abnormality may temporarily not notified to the user of the sensing object, for example, the code scanning abnormality is intercepted by using the signal reprocessing software, or the signal reprocessing software negotiates with a corresponding client.

S604: If yes, determine that the sensing object is in the unfriendly working mode.

A state in which a code scanning abnormality has occurred on the sensing object or a code scanning abnormality is to occur on the sensing object can be predefined as the unfriendly working mode. The "unfriendly" herein is mainly for a user of the sensing object, because poor experience can be brought to the user.

S606: Send, to the sensing object by using at least one near field communication antenna, the excitation signal that carries disguised code scanning data, so that the sensing object obtains, based on the disguised code scanning data, result data obtained by performing the target service through the communication connection, and disguises the result data as code scanning success result data to be provided to a user.

In one or more embodiments of this specification, the disguised code scanning data (which is, for example, represented in a manner of a flag bit, a field, or a waveform) can be used to notify the sensing object that a service corresponding to a code scanning abnormality can be completed through near field communication this time as a replacement this time, so that a service execution result obtained through near field communication can be used as a code scanning result (actually, the code scanning manner may fail) to be provided to the user. In this way, a channel source of the result data is actually disguised. From a perspective of a user, it is considered that the current code scanning service is successfully executed, experience is smoother, and a service retry burden on a code scanning side is reduced.

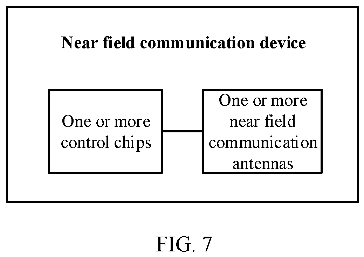

FIG. 7 is a schematic diagram illustrating a near field communication device, according to one or more embodiments of the present specification. A main structure of the device is presented in an abstract manner, but a specific module layout and connection relationship are not limited.

The near field communication device in FIG. 7 includes one or more near field communication antennas and one or more control chips (this specification mainly considers a case of a plurality of chips and a plurality of near field communication antennas, especially a case of a plurality of near field communication antennas). At least one near field communication antenna collects a near field communication signal of a currently approaching sensing object. The control chip determines a working mode of the sensing object based on the near field communication signal, and if it is determined that the sensing object is in an unfriendly working mode, sends an excitation signal to the sensing object by using at least one near field communication antenna, so that the sensing object exits the unfriendly working mode in response to the excitation signal. At least one near field communication antenna establishes a communication connection to the sensing object, and executes a target service through the communication connection.

A rigid PCB or a flexible circuit board can be used to carry these components, or a rigid PCB and a flexible circuit board can be used in combination, and are connected together by using a connector. The control chip controls, through polling control or parallel control, a plurality of near field communication antennas on the near field communication device. Moreover, the control chip can analyze a strength difference between signals received by the near field communication antennas, and determine a relative position between a near field communication antenna of a mobile phone and the near field communication device based on a signal strength analysis result. In addition, the near field communication antenna detects a power consumption mode in which near field communication of the mobile phone is located (another type of unfriendly working mode can also be correspondingly processed), and sends an excitation signal when detecting that a near field communication signal of the mobile phone enters a low power consumption mode, so that near field communication of the mobile phone exits the low power consumption mode. Through the above-mentioned signal processing, the control chip can send a control signal to choose to control a near field communication antenna of the near field communication device that is closest to the near field communication antenna of the mobile phone to establish a communication connection to the near field communication antenna of the mobile phone.

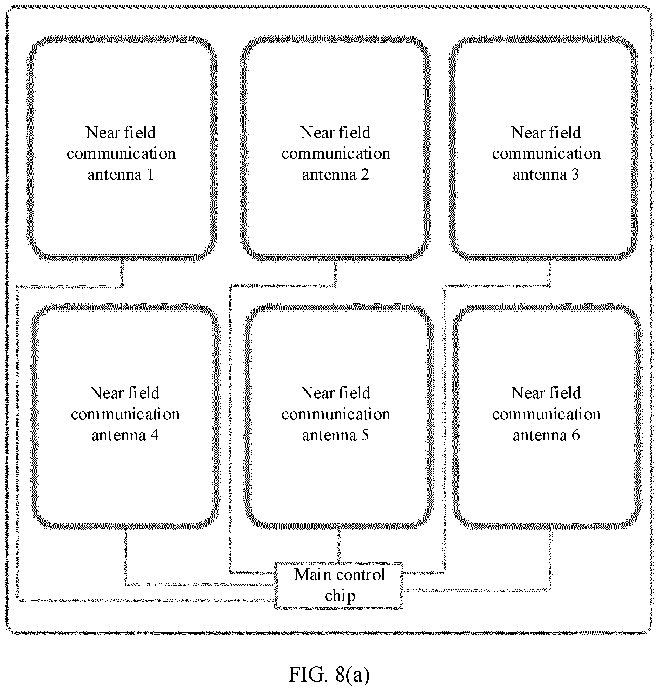

During antenna layout, to obtain a better sensing and near field communication range, if there are a plurality of near field communication antennas, the plurality of near field communication antennas can be deployed on the near field communication device in a distributed manner, for example, the plurality of near field communication antennas are deployment in a circumferential direction in a distributed manner, and are deployed close to an outside side. During layout of the control chip, these antennas can be uniformly controlled, or distributed control can be performed by using a plurality of sub-control chips. A specific connection structure is also diversified, and can be selected based on an actual requirement. Intuitively, references can be made to specific implementation structure examples in FIG. 8(a), FIG. 9, and FIG. 10.

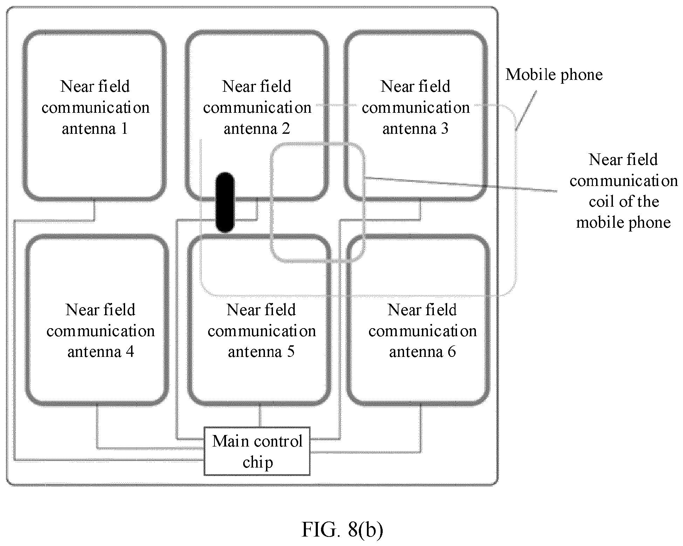

FIG. 8(a) is a schematic diagram illustrating a specific structure of a first near field communication device in an application scenario, according to one or more embodiments of this specification. FIG. 8(b) to FIG. 8(d) are schematic diagrams illustrating a mobile phone approaching the near field communication device in this scenario.

In FIG. 8(a), a main control chip of the near field communication device controls six near field communication antennas in turn or simultaneously through a plurality of channels.

When the mobile phone approaches the near field communication device from a position shown in FIG. 8(b), a near field communication antenna 2, a near field communication antenna 3, a near field communication antenna 5, and a near field communication antenna 6 may synchronously sense a signal sent by a communication coil of the mobile phone. The main control chip is highly likely to determine, based on collected signals, that a near field communication antenna of the mobile phone is closer to the near field communication antenna 2 of the near field communication device. In this case, the control chip forms control logic to enhance a signal on the near field communication antenna 2 and disable control signals on other near field communication antennas. In addition, when the mobile phone approaches the near field communication device, the main control chip also performs power consumption mode determining on near field communication signals of the mobile phone that are synchronously collected by the near field communication antenna 2, the near field communication antenna 3, the near field communication antenna 5, and the near field communication antenna 6, and sends an excitation signal if it is determined that near field communication of the mobile phone is in a low power consumption mode, so that near field communication of the mobile phone exits the low power consumption mode.

When a relative position between the mobile phone and the near field communication device is fixed, if the near field communication antenna of the mobile phone is located in different positions on the mobile phone, the near field communication antenna may establish a connection to different near field communication antennas of the near field communication device, which can be based on a distance between the near field communication antennas of the two parties.

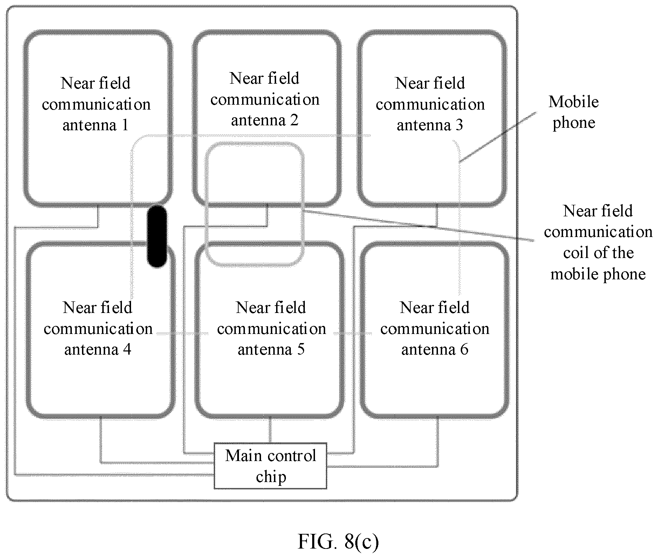

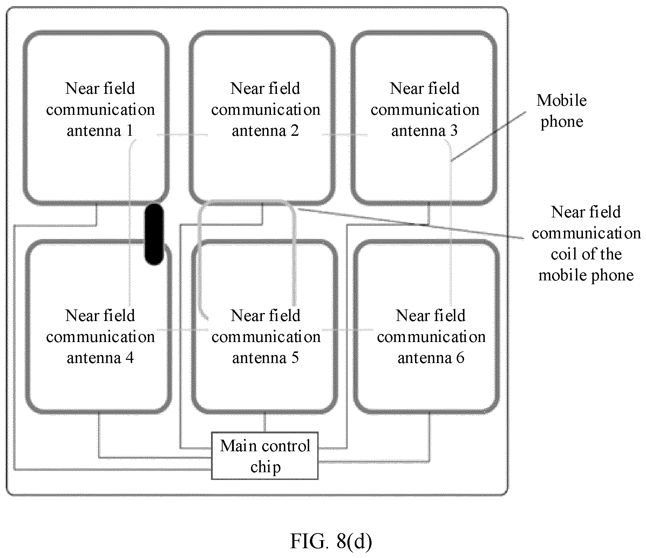

For example, the near field communication antenna 2 of the near field communication device in FIG. 8(c) may establish a connection to the near field communication antenna of the mobile phone, and the near field communication antenna 5 of the near field communication device in FIG. 8(d) may establish a connection to the near field communication antenna of the mobile phone.

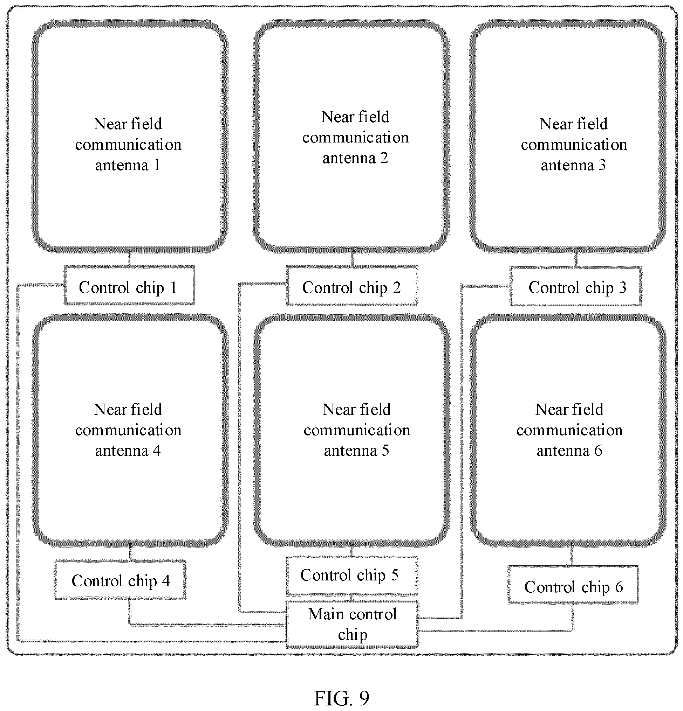

FIG. 9 is a schematic diagram illustrating a specific structure of a second near field communication device in an application scenario, according to one or more embodiments of this specification.

A working principle in FIG. 9 is similar to that in FIG. 8(a), and a difference mainly lies in a control manner. In FIG. 9, each near field communication antenna is separately controlled by using a control chip, and data and a control signal are transmitted between each control chip and a main chip. In this way, reliability is better, and different near field communication antennas are flexibly used in parallel.

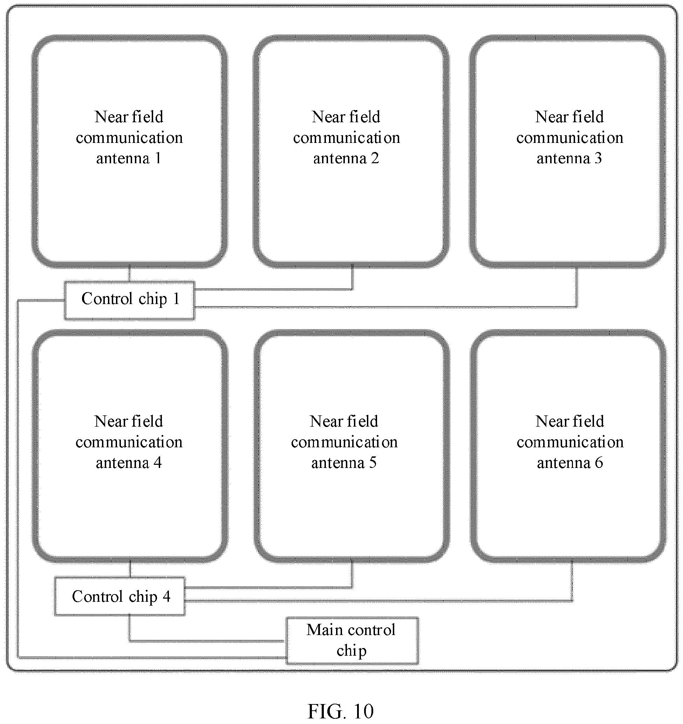

FIG. 10 is a schematic diagram illustrating a specific structure of a third near field communication device in an application scenario, according to one or more embodiments of this specification.

A working principle in FIG. 10 is similar to that in FIG. 8(a), and a difference mainly lies in a control manner. In FIG. 10, several near field communication (which may not be limited to three near field communication antennas shown in the figure) are grouped and are controlled by using a control chip, and data and control signal are transmitted between each control chip and a main chip. In this way, near field communication antennas can be grouped for flexible control, which helps simultaneously access different services, and different groups are separately responsible for interaction.

Certainly, in addition to the example layouts in FIG. 8(a), FIG. 9, and FIG. 10, there are more specific layouts. A layout can be selected and implemented based on a requirement.

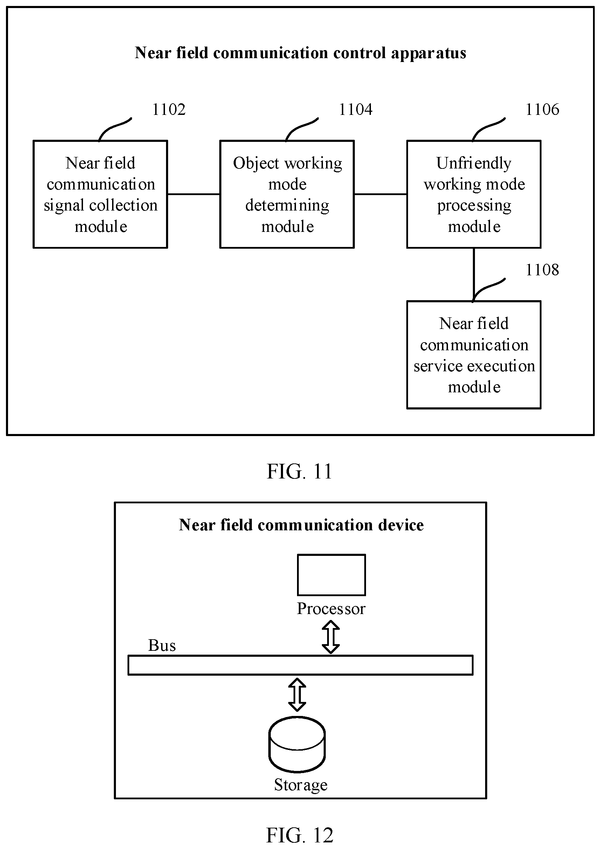

Based on the same idea, one or more embodiments of this specification further provide an apparatus and a device corresponding to the above-mentioned method, as shown in FIG. 11 and FIG. 12. The apparatus and the device can correspondingly perform the above-mentioned method and related optional solutions.

FIG. 11 is a schematic diagram illustrating a structure of a near field communication control apparatus, according to one or more embodiments of this specification. The apparatus includes:
a near field communication signal collection module 1102, configured to collect a near field communication signal of a currently approaching sensing object by using one or more near field communication antennas deployed on a near field communication device;
an object working mode determining module 1104, configured to determine a working mode of the sensing object based on the near field communication signal;
an unfriendly working mode processing module 1106, configured to: if it is determined that the sensing object is in an unfriendly working mode, send an excitation signal to the sensing object by using at least one near field communication antenna, so that the sensing object exits the unfriendly working mode in response to the excitation signal; and
a near field communication service execution module 1108, configured to establish a communication connection to the sensing object by using at least one near field communication antenna, and execute a target service through the communication connection.

Optionally, the object working mode determining module 1104 obtains a signal waveform of the near field communication signal;
determines whether a peak value of the signal waveform is less than a first specified threshold, and whether a time difference between different peaks of the signal waveform is greater than a second specified threshold; and
if yes, determines that the sensing object is in the unfriendly working mode.

Optionally, the object working mode determining module 1104 sends a card-reading detection signal to the sensing object in response to the near field communication signal;
determines whether the sensing object makes a specified positive response to the card-reading detection signal; and
if yes, determines that the sensing object is in the unfriendly working mode.

Optionally, the unfriendly working mode processing module 1106 sends a working mode switching excitation signal to the near field communication device by using at least one near field communication antenna, so that the sensing object switches to a card reader mode in response to the working mode switching excitation signal to expand a near field communication range.

Optionally, the object working mode determining module 1104 determines, based on the near field communication signal, a target emulated card or a target card reader currently used by the sensing object;
determines whether the target emulated card or the target card reader matches the near field communication device; and
if no, determines that the sensing object is in the unfriendly working mode; and
exiting the unfriendly working mode specifically includes:
   switching to using an emulated card or a card reader that matches the near field communication device.

Optionally, the object working mode determining module 1104 obtains a signal waveform of the near field communication signal;
determines, based on a peak value of the signal waveform, whether the sensing object currently uses an emulated card or a card reader; and
if the sensing object currently uses the emulated card, determines, based on a time difference between different peaks of the signal waveform, which emulated card in a plurality of different emulated cards is the target emulated card currently used by the sensing object.

Optionally, signal reprocessing software provided by a service provider of the near field communication device is pre-deployed on the sensing object; and
the near field communication signal is processed by the signal reprocessing software, and carries information used to indicate the target emulated card or the target card reader.

Optionally, the near field communication antenna used to send the excitation signal and the near field communication antenna used to establish the communication connection are not a same near field communication antenna.

Optionally, the object working mode determining module 1104 determines, based on information additionally reflected in the near field communication signal, whether the sensing object scans a code abnormally, where the additionally reflected information is obtained through processing by the signal reprocessing software; and if yes, determines that the sensing object is in the unfriendly working mode.

Optionally, the unfriendly working mode processing module 1106 sends, to the sensing object by using at least one near field communication antenna, the excitation signal that carries disguised code scanning data, so that the sensing object obtains, based on the disguised code scanning data, result data obtained by performing the target service through the communication connection, and disguises the result data as code scanning success result data to be provided to a user.

Optionally, a plurality of near field communication antennas are deployed on the near field communication device; and
the near field communication service execution module 1108 selects, as a target near field communication antenna based on the near field communication signals respectively collected by the plurality of near field communication antennas and a specified advantage dimension, at least one near field communication antenna that has an advantage from the near field communication antennas deployed on the near field communication device;
temporarily enhances a signal on the target near field communication antenna, and/or temporarily weakens a signal on one or more remaining near field communication antennas; and
establishes the communication connection to the sensing object by using the target near field communication antenna.

FIG. 12 is a schematic diagram illustrating a structure of a near field communication device, according to one or more embodiments of this specification. The device includes:
at least one processor; and
a memory communicatively connected to the at least one processor, where
the memory stores instructions executable by the at least one processor, and the instructions are executed by the at least one processor, to enable the at least one processor to perform the following operations:
   collecting a near field communication signal of a currently approaching sensing object by using one or more near field communication antennas deployed on a near field communication device;
   determining a working mode of the sensing object based on the near field communication signal;
   if it is determined that the sensing object is in an unfriendly working mode, sending an excitation signal to the sensing object by using at least one near field communication antenna, so that the sensing object exits the unfriendly working mode in response to the excitation signal; and
   establishing a communication connection to the sensing object by using at least one near field communication antenna, and executing a target service through the communication connection.

Based on the same idea, one or more embodiments of this specification further provide a nonvolatile computer storage medium that stores computer executable instructions, and the computer executable instructions are set to:
collecting a near field communication signal of a currently approaching sensing object by using one or more near field communication antennas deployed on a near field communication device;
determine a working mode of the sensing object based on the near field communication signal;
if it is determined that the sensing object is in an unfriendly working mode, send an excitation signal to the sensing object by using at least one near field communication antenna, so that the sensing object exits the unfriendly working mode in response to the excitation signal; and
establish a communication connection to the sensing object by using at least one near field communication antenna, and executing a target service through the communication connection.

In the 1990s, whether a technical improvement is a hardware improvement (for example, an improvement to a circuit structure, such as a diode, a transistor, or a switch) or a software improvement (an improvement to a method procedure) can be clearly distinguished. However, as technologies develop, current improvements to many method procedures can be considered as direct improvements to hardware circuit structures. A designer usually programs an improved method procedure into a hardware circuit to obtain a corresponding hardware circuit structure. Therefore, a method procedure can be improved using a hardware entity module. For example, a programmable logic device (PLD) (for example, a field programmable gate array (FPGA)) is such an integrated circuit, and a logical function of the PLD is determined by a user through device programming. The designer performs programming to "integrate" a digital system to a PLD without requesting a chip manufacturer to design and produce an application-specific integrated circuit chip. In addition, at present, instead of manually manufacturing an integrated circuit chip, this type of programming is mostly implemented by using "logic compiler" software. The programming is similar to a software compiler used to develop and write a program. Original code needs to be written in a particular programming language for compilation. The language is referred to as a hardware description language (HDL). There are many HDLs, such as the Advanced Boolean Expression Language (ABEL), the Altera Hardware Description Language (AHDL), Confluence, the Cornell University Programming Language (CUPL), HDCal, the Java Hardware Description Language (JHDL), Lava, Lola, MyHDL, PALASM, and the Ruby Hardware Description Language (RHDL). The very-high-speed integrated circuit hardware description language (VHDL) and Verilog are most commonly used. A person skilled in the art should also understand that a hardware circuit that implements a logical method procedure can be readily obtained once the method procedure is logically programmed by using some described hardware description languages and is programmed into an integrated circuit.

A controller can be implemented by using any appropriate method. For example, the controller can be a microprocessor or a processor, or a computer-readable medium that stores computer-readable program code (such as software or firmware) that can be executed by the microprocessor or the processor, a logic gate, a switch, an application-specific integrated circuit (ASIC), a programmable logic controller, or an embedded microprocessor. Examples of the controller include but are not limited to the following microprocessors: ARC 625D, Atmel AT91SAM, Microchip PIC18F26K20, and Silicone Labs C8051F320. The memory controller can also be implemented as a part of the control logic of the memory. A person skilled in the art also knows that, in addition to implementing the controller by using only the computer-readable program code, logic programming can be performed on method steps to enable the controller to implement the same function in forms of the logic gate, the switch, the application-specific integrated circuit, the programmable logic controller, the embedded microcontroller, etc. Therefore, the controller can be considered as a hardware component, and an apparatus included in the controller for implementing various functions can also be considered as a structure in the hardware component. Alternatively, the apparatus configured to implement various functions can even be considered as both a software module implementing the method and a structure in the hardware component.

The system, apparatus, module, or unit illustrated in the above-mentioned embodiments can be specifically implemented by using a computer chip or an entity, or can be implemented by using a product having a specific function. A typical implementation device is a computer. Specifically, for example, the computer can be a personal computer, a laptop computer, a cellular phone, a camera phone, a smartphone, a personal digital assistant, a media player, a navigation device, an e-mail device, a game console, a tablet computer, a wearable device, or any combination of these devices.

For ease of description, the above-mentioned apparatus is divided into various units based on functions for separate description. Certainly, when this specification is implemented, functions of the units can be implemented in one or more pieces of software and/or hardware.

A person skilled in the art should understand that the embodiments of this specification can be provided as methods, systems, or computer program products. Therefore, the embodiments of this specification can use a form of hardware only embodiments, software only embodiments, or embodiments with a combination of software and hardware. In addition, a form of a computer program product that is implemented on one or more computer-usable storage media (including but not limited to a disk memory, a CD-ROM, an optical memory, etc.) that include computer-usable program code can be used in the embodiments of this specification.

This specification is described with reference to the flowcharts and/or block diagrams of the method, the device (system), and the computer program product according to the embodiments of this specification. It should be understood that computer program instructions can be used to implement each procedure and/or each block in the flowcharts and/or the block diagrams and a combination of a procedure and/or a block in the flowcharts and/or the block diagrams. These computer program instructions can be provided for a general-purpose computer, a dedicated computer, an embedded processor, or a processor of another programmable data processing device to generate a machine, so the instructions executed by the computer or the processor of the another programmable data processing device generate an apparatus for implementing a specific function in one or more procedures in the flowcharts and/or in one or more blocks in the block diagrams.

These computer program instructions can alternatively be stored in a computer-readable storage that can instruct a computer or an another programmable data processing device to work in a specific way, so the instructions stored in the computer-readable storage generate an artifact that includes an instruction apparatus. The instruction apparatus implements a specific function in one or more procedures in the flowcharts and/or in one or more blocks in the block diagrams.

These computer program instructions can be loaded onto the computer or another programmable data processing device, so a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

In a typical configuration, the computing device includes one or more processors (CPU), an input/output interface, a network interface, and a memory.

The memory can include a form of a non-persistent memory, a random access memory (RAM) and/or a nonvolatile memory, etc. in a computer-readable medium, such as a read-only memory (ROM) or a flash memory (flash RAM). The memory is an example of the computer readable medium.

The computer-readable medium includes persistent and non-persistent, removable and non-removable media, which can store information by using any method or technology. The information can be a computer-readable instruction, a data structure, a program module, or other data. Examples of the computer storage medium include but are not limited to a phase-change random access memory (PRAM), a static random access memory (SRAM), a dynamic random access memory (DRAM), another type of random access memory (RAM), a read-only memory (ROM), an electrically erasable programmable read-only memory (EEPROM), a flash memory or another memory technology, a compact disc read-only memory (CD-ROM), a digital versatile disc (DVD) or another optical storage, a cassette magnetic tape, a magnetic tape/magnetic disk storage or another magnetic storage device, or any other non-transmission medium. The computer storage medium can be configured to store information accessible to a computing device. Based on the definition in this specification, the computer-readable medium does not include a transitory computer-readable medium such as a modulated data signal and carrier.

It should be further noted that, the terms "include", "comprise", or any other variant thereof are intended to cover a non-exclusive inclusion, so a process, a method, a product, or a device that includes a list of elements not only includes those elements but also includes other elements that are not expressly listed, or further includes elements inherent to such a process, method, product, or device. Without more constraints, an element preceded by "includes a ..." does not preclude the existence of additional identical elements in the process, method, product, or device that includes the element.

This specification can be described in the general context of computer-executable instructions, for example, a program module. Generally, the program module includes a routine, a program, an object, a component, a data structure, etc. executing a specific task or implementing a specific abstract data type. This specification can alternatively be practiced in distributed computing environments. In the distributed computing environments, tasks are performed by remote processing devices connected through a communication network. In the distributed computing environments, the program module can be located in a local and remote computer storage medium including a storage device.

The embodiments of this specification are described in a progressive way. For the same or similar parts of the embodiments, mutual references can be made between the embodiments. Each embodiment focuses on a difference from other embodiments. Particularly, the embodiments of the apparatus, device, and nonvolatile computer storage medium are basically similar to the method embodiments, and therefore are described briefly. For related parts, references can be made to related descriptions in the method embodiments.

Specific embodiments of this specification are described above. Other embodiments fall within the scope of the appended claims. In some cases, the actions or steps described in the claims can be performed in an order different from that in the embodiments, and the desired results can still be achieved. In addition, the processes depicted in the accompanying drawings do not necessarily need a specific order or a sequential order to achieve the desired results. In some implementations, multi-tasking and parallel processing are feasible or may be advantageous.

The above-mentioned descriptions are merely one or more embodiments of this specification and are not intended to limit this specification. A person skilled in the art can make various changes and variations to the one or more embodiments of this specification. Any modification, equivalent replacement, improvement, etc. made within the spirit and principle of the one or more embodiments of this specification shall fall within the scope of the claims of this specification.

## Claims

1. A near field communication control method, comprising:
collecting a near field communication signal of a currently approaching sensing object by using one or more near field communication antennas deployed on a near field communication device;
determining a working mode of the sensing object based on the near field communication signal;
if it is determined that the sensing object is in an unfriendly working mode, sending an excitation signal to the sensing object by using at least one near field communication antenna, so that the sensing object exits the unfriendly working mode in response to the excitation signal; and
establishing a communication connection to the sensing object by using at least one near field communication antenna, and executing a target service through the communication connection.

2. The method according to claim 1, wherein determining the working mode of the sensing object based on the near field communication signal specifically comprises:
obtaining a signal waveform of the near field communication signal;
determining whether a peak value of the signal waveform is less than a first specified threshold, and whether a time difference between different peaks of the signal waveform is greater than a second specified threshold; and
if yes, determining that the sensing object is in the unfriendly working mode.

3. The method according to claim 1, wherein determining the working mode of the sensing object based on the near field communication signal specifically comprises:
sending a card-reading detection signal to the sensing object in response to the near field communication signal;
determining whether the sensing object makes a specified positive response to the card-reading detection signal; and
if yes, determining that the sensing object is in the unfriendly working mode.

4. The method according to claim 1 or 3, wherein sending the excitation signal to the sensing object by using at least one near field communication antenna, so that the sensing object exits the unfriendly working mode in response to the excitation signal specifically comprises:
sending a working mode switching excitation signal to the near field communication device by using the at least one near field communication antenna, so that the sensing object switches to a card reader mode in response to the working mode switching excitation signal to expand a near field communication range.

5. The method according to claim 1, wherein determining the working mode of the sensing object based on the near field communication signal specifically comprises:
determining, based on the near field communication signal, a target emulated card or a target card reader currently used by the sensing object;
determining whether the target emulated card or the target card reader matches the near field communication device; and
if no, determining that the sensing object is in the unfriendly working mode; and
exiting the unfriendly working mode specifically comprises:
switching to using an emulated card or a card reader that matches the near field communication device.

6. The method according to claim 5, wherein determining, based on the near field communication signal, the target emulated card or the target card reader currently used by the sensing object specifically comprises:
obtaining a signal waveform of the near field communication signal;
determining, based on a peak value of the signal waveform, whether the sensing object currently uses an emulated card or a card reader; and
if the sensing object currently uses the emulated card, determining, based on a time difference between different peaks of the signal waveform, which emulated card in a plurality of different emulated cards is the target emulated card currently used by the sensing object.

7. The method according to claim 5 or 6, wherein signal reprocessing software provided by a service provider of the near field communication device is pre-deployed on the sensing object; and
the near field communication signal is processed by the signal reprocessing software, and carries information used to indicate the target emulated card or the target card reader.

8. The method according to claim 5 or 6, wherein the near field communication antenna used to send the excitation signal and the near field communication antenna used to establish the communication connection are not a same near field communication antenna.

9. The method according to claim 7, wherein determining the working mode of the sensing object based on the near field communication signal specifically comprises:
determining, based on information additionally reflected in the near field communication signal, whether the sensing object scans a code abnormally, wherein the additionally reflected information is obtained through processing by the signal reprocessing software; and
if yes, determining that the sensing object is in the unfriendly working mode.

10. The method according to claim 9, wherein sending the excitation signal to the sensing object by using at least one near field communication antenna specifically comprises:
sending, to the sensing object by using at least one near field communication antenna, the excitation signal that carries disguised code scanning data, so that the sensing object obtains, based on the disguised code scanning data, result data obtained by performing the target service through the communication connection, and disguises the result data as code scanning success result data to be provided to a user.

11. The method according to claim 1, wherein a plurality of near field communication antennas are deployed on the near field communication device; and
establishing the communication connection to the sensing object by using at least one near field communication antenna specifically comprises:
selecting, as a target near field communication antenna based on the near field communication signals respectively collected by the plurality of near field communication antennas and a specified advantage dimension, at least one near field communication antenna that has an advantage from the near field communication antennas deployed on the near field communication device;
temporarily enhancing a signal on the target near field communication antenna, and/or temporarily weakening a signal on one or more remaining near field communication antennas; and
establishing the communication connection to the sensing object by using the target near field communication antenna.

12. An apparatus comprising means for performing the steps of the method of any one of claims 1 to 11.

13. A near field communication device, comprising one or more near field communication antennas and one or more control chips, wherein
at least one near field communication antenna collects a near field communication signal of a currently approaching sensing object;
the control chip determines a working mode of the sensing object based on the near field communication signal, and if it is determined that the sensing object is in an unfriendly working mode, sends an excitation signal to the sensing object by using at least one near field communication antenna, so that the sensing object exits the unfriendly working mode in response to the excitation signal; and
at least one near field communication antenna establishes a communication connection to the sensing object, and executes a target service through the communication connection.

14. A near field communication device, comprising a memory and a processor, wherein the memory stores instructions, and when the processor executes the instructions, the near field communication device is caused to implement the method of any one of claims 1 to 11.

15. A computer program comprising computer executable instructions which when executed by a processor cause the processor to implement the method of any one of claims 1 to 11.
